# EUROPÄISCHE PATENTANMELDUNG

(11) **EP 1 149 737 A2**
(43) Veröffentlichungstag der Anmeldung: **31.10.2001**
(21) Anmeldenummer: 01109723.5
(22) Anmeldetag: 20.04.2001
(51) Int. Cl.: B60R 13/10

(54) **Plakette, insbesondere Zulassungs-, Prüf-, Siegel- oder Mautplakette, vorzugsweise für Kraftfahrzeuge**

(30) Priorität: 27.04.2000 DE 10020556
(71) Anmelder: Witte plusprint Druckmedien GmbH, 48163 Münster (DE)
(72) Erfinder: Kunz, Otmar-Jürgen, 48308 Senden (DE); Museler, Matthias, 48157 Münster (DE)
(74) Vertreter: Schulze Horn & Partner

(57) **Zusammenfassung**

Die Erfindung betrifft eine Plakette (1), insbesondere Zulassungs-, Prüf-, Siegel- oder Mautplakette, vorzugsweise für Kraftfahrzeuge, mit einer Trägerschicht (10), einer darauf mindestens einseitig aufgebrachten ein- oder mehrfarbigen Bedruckung (11) und einer rück- oder vorderseitig angeordneten Klebstoffschicht (13), mittels der die Plakette (1) an einer Anbringungsfläche anklebbar ist.

Die Plakette (1) gemäß Erfindung ist dadurch gekennzeichnet, daß die Bedruckung (11) zumindest teilweise aus einem Druckbild (11') besteht, das nach Maßgabe von digitalen Druckbilddaten erzeugt ist, und daß die Druckbilddaten digital gezielt so verändert sind, daß sie mindestens ein mit bloßem Auge nicht erkennbares, im unmittelbar sichtbaren Druckbild (11') enthaltenes Latentbild (11") bilden, das eine codierte Information enthält oder darstellt und das nur mit einer angepaßten optischen Decodiereinrichtung erkennbar ist.

## Beschreibung

Die vorliegende Erfindung betrifft eine Plakette, insbesondere Zulassungs-, Prüf-, Siegel- oder Mautplakette, vorzugsweise für Kraftfahrzeuge, mit einer Trägerschicht, einer darauf mindestens einseitig aufgebrachten ein- oder mehrfarbigen Bedruckung und einer rück- oder vorderseitig angeordneten Klebstoffschicht, mittels der die Plakette an einer Anbringungsfläche anklebbar ist.

Eine erste Plakette der genannten Art ist aus der DE-PS 28 31 587 bekannt. Bei dieser Plakette ist vorgesehen, daß die Trägerschicht segmentiert ist. Hierdurch wird erreicht, daß sich die Plakette bei dem Versuch eines Abhebens von der Anbringungsfläche in kleine Bruchstücke zerlegt, die nicht wieder zu der ursprünglichen Plakette zusammenfügbar sind.

Eine weitere Plakette der eingangs genannten Art ist aus der EP 0 581 030 B1 bekannt. Bei dieser Plakette ist vorgesehen, daß sie neben der Bedruckung zusätzlich ein Raster und eine Farbschicht aufweist, die ebenfalls aufgedruckt sind. Dabei ist die Farbschicht in einem zu dem Raster komplementären Muster unterbrochen. Hierdurch wird erreicht, daß die Bedruckung bei einem Ablöseversuch zerstört wird, so daß die Plakette danach nicht wieder herstellbar und somit auch nicht mißbräuchlich verwendbar ist.

Bei den bekannten Plaketten wird zwar mit einer hohen Sicherheit ein unbefugtes Ablösen und Übertragen an eine andere Stelle verhindert, jedoch ist als Nachteil festzustellen, daß derartige Plaketten inzwischen in einer dem Original entsprechenden Qualität und Ausführung von Fälschern nachgeahmt und zu kriminellen Zwecken in Verkehr gebracht werden.

Für die vorliegende Erfindung stellt sich deshalb die Aufgabe, eine Plakette der eingangs genannten Art zu schaffen, die die dargelegten Nachteile vermeidet und bei der insbesondere eine Nachahmung durch Unbefugte unmöglich oder zumindest erheblich erschwert ist.

Die Lösung dieser Aufgabe gelingt erfindungsgemäß durch eine Plakette der eingangs genannten Art, die dadurch gekennzeichnet ist, daß die Bedruckung zumindest teilweise aus einem Druckbild besteht, das nach Maßgabe von digitalen Druckbilddaten erzeugt ist, und daß die Druckbilddaten digital gezielt so verändert sind, daß sie mindestens ein mit bloßem Auge nicht erkennbares, im unmittelbar sichtbaren Druckbild enthaltenes Latentbild bilden, das eine codierte Information enthält oder darstellt und das nur mit einer angepaßten optischen Decodiereinrichtung erkennbar ist.

Für die Herstellung der erfindungsgemäßen Plakette wird ein sehr spezielles Fachwissen und insbesondere ein besonderes Datenverarbeitungsprogramm benötigt, von dem unbefugte Dritte bei entprechender Geheimhaltung durch autorisierte Plakettenhersteller keine Kenntnis erlangen können. Der Besitz einer entsprechenden Plakette reicht nicht aus, die für eine Nachahmung nötigen Kenntnisse zu erlangen. Außerdem besteht die Möglichkeit, die Art der Veränderung der Druckbilddaten von Zeit zu Zeit oder in Abhängigkeit von anderen, für Dritte nicht erkennbaren Kriterien zu verändern, so daß eine zusätzliche Sicherheit gegen Nachahmungen erzielt wird. Die erforderliche optische Decodiereinrichtung kann relativ einfach sein, da mit dieser nur die codierte Information lesbar gemacht werden muß. Mit der optischen Decodiereinrichtung wird aber keinerlei Möglichkeit geschaffen, eine Codierung vorzunehmen. Damit liefert auch der Besitz einer Decodiereinrichtung einem unbefugten Dritten nicht die für eine Nachahmung nötigen Kenntnisse. Nach außen hin bleibt bei Betrachtung mit dem bloßen Auge das optische Erscheinungsbild der Plakette unverändert, so daß ohne Decodiereinrichtung nicht feststellbar ist, ob die Plakette mit einem Latentbild ausgeführt ist oder nicht. Da das Latentbild drucktechnisch herstellbar ist, ist auch der Aufwand für die Erzeugung der einzelnen Plakette relativ gering, so daß die erfindungsgemäßen Plaketten ohne große Mehrkosten im Vergleich zu herkömmlichen Plaketten gefertigt werden können.

In weiterer Ausgestaltung der erfindungsgemäßen Plakette ist vorgesehen, daß das Latentbild eine für eine Vielzahl von Plaketten gleichbleibende feste Information enthält.

Bevorzugt ist dabei vorgesehen, daß das Latentbild eine Hersteller- oder Anwender- oder Ausgabestellen-Information enthält.

Alternativ oder zusätzlich kann das Latentbild eine für jede Plakette individuelle Information enthalten.

Die inidividuelle Information besteht bevorzugt aus einer fortlaufenden Numerierung oder einer auf ein mit der Plakette zu versehendes Objekt bezogenen Information.

Die gleichbleibende feste Information und die für jede Plakette individuelle Information können sowohl innerhalb eines einzigen Latentbildes als auch in getrennten Latentbildern auf die Plakette aufgedruckt sein.

Um eine möglichst schnelle und mit einfachen Mitteln durchführbare Decodierung der codierten Information zu ermöglichen, sieht die Erfindung weiter vor, daß bei Betrachtung des Druckbildes durch die Decodiereinrichtung das Latentbild eine die codierte Information wiedergebende Folge von Ziffern und/oder Buchstaben und/oder anderen Zeichen bildet.

Als Decodiereinrichtung ist bevorzugt eine spezielle optische Linse einsetzbar, die vorteilhaft weder elektrische Energie noch elektronische Einrichtungen erfordert. Eine solche Decodiereinrichtung ist kostengünstig herstellbar und kann von zur Kontrolle von Plaketten befugten Personen problemlos mitgeführt und an praktisch jedem beliebigen Ort eingesetzt werden.

Um eine rationelle Fertigung größerer Stückzahlen von erfindungsgemäßen Plaketten zu ermöglichen, ist bevorzugt vorgesehen, daß sie ein oder mehrere Latentbilder aus einer auf einem "endlosen" streifen- oder bahnförmigen Träger aufgedruckten vorproduzierten, Latentbilder enthaltenden Druckbild-Anordnung aufweist. Die einzelnen Latentbilder der "endlosen" Latentbilder-Anordnung können dabei wahlweise untereinander identisch oder alternativ vollständig oder wenigstens teilweise voneinander verschieden sein, je nach den Erfordernissen des konkreten Anwendungsfalls.

Weiter wird vorgeschlagen, daß die Bedruckung oder das Druckbild in zwei oder mehr Teil-Druckbilder aufgeteilt ist, die getrennt voneinander auf die Plakette aufgedruckt sind. Zum einen kann hierdurch die Fertigung von großen Stückzahlen von Plaketten rationalisiert werden, indem alle gleichbleibenden Teile der Bedruckung vorab gemeinsam in einem einfachen, vorzugsweise nicht-digitalen Druckverfahren aufgedruckt werden und nur das Teil-Druckbild, welches das Latentbild enthält, in einem hierfür erforderlichen digitalen Druckverfahren separat erzeugt wird. Zum anderen wird durch diese Maßnahme die unbefugte Nachahmung der Plaketten weiter erschwert.

Um die gesamte Bedruckung oder zumindest das Druckbild, welches das Latentbild enthält, gegen äußere Einflüsse und Beschädigungen zu schützen, schlägt die Erfindung weiterhin vor, daß die Plakette neben der Trägerschicht und der Klebstoffschicht wenigstens eine weitere Schicht umfaßt und daß die Bedruckung oder das Druckbild zwischen wenigstens zwei Schichten der Plakette eingeschlossen ist. Wenn die Bedruckung vollständig auf einer Seite einer der Schichten der Plakette aufgedruckt ist, genügt eine weitere Schicht zur Abdeckung und zum Einschließen der Bedruckung, so daß dann schon ein vollständiger Schutz erreicht ist. Wenn die Bedruckung oder das Druckbild in Teil-Druckbilder aufgeteilt ist, können diese Teil-Druckbilder auch auf verschiedene Seiten einer Schicht oder auf verschiedene Schichten der Plakette aufgedruckt und dann zwischen verschiedenen Schichten der Plakette eingeschlossen sein. Neben dem Schutz der Bedruckung gegen äußere Einflüsse wird hiermit eine noch größere Fälschungssicherheit erzielt.

Zusätzlich kann auch die erfindungsgemäße Plakette, wie an sich bekannt, so ausgeführt sein, daß sie nach einem Ablösen von ihrer Anbringungsfläche unmittelbar erkennbar und unumkehrbar mechanisch und/oder optisch verändert ist. Damit wird nicht nur die Fälschung der Plakette, sondern auch deren unbefugte Übertragung an eine andere Anbringungsfläche unmöglich gemacht oder zumindest so leicht erkennbar, daß eine sofortige Aufdeckung des Fälschungsversuchs möglich ist.

Eine weitere Erhöhung der Fälschungs- und Übertragungssicherheit der Plakette gemäß Erfindung kann dadurch erreicht werden, daß die Plakette mit einer zusätzlichen, unabhängig vom Latentbild ablesbaren Kennzeichnung, vorzugsweise in Form eines Barcodes, versehen ist. Diese zusätzliche Kennzeichnung ist, insbesondere bei Verwendung eines Barcodes, leicht ablesbar und benötigt nur relativ wenig Platz auf der Plakette, ermöglicht aber gleichzeitig eine große Zahl von Codierungsmöglichkeiten. Außerdem sind Lesegeräte zum Ablesen und Decodieren eines Barcodes gängig und damit kostengünstig beschaffbar und einsetzbar. Auch ist eine Kombination eines Barcode-Lesegerätes mit der Decodiereinrichtung zur Sichtbarmachung des Latentbildes in einer einzigen Einrichtung denkbar. Diese zusätzliche Kennzeichnung kann beispielsweise zu Kontroll- oder Überprüfungszwecken herangezogen werden, indem die an einer Plakette festgestellte zusätzliche Kennzeichnung mit im Latentbild festgelegten Informationen und/oder mit an einer zentralen, befugten Stelle hinterlegten Daten verglichen wird. Jede Abweichung zwischen diesen Daten ist ein Anzeichen für eine Fälschung, die auf diese Weise schnell erkennbar wird.

Ein Ausführungsbeispiel der erfindungsgemäßen Plakette wird im folgenden anhand einer Zeichnung erläutert. Die Figuren der Zeichnung zeigen:
- Figur 1: eine Plakette in Draufsicht in schematischer Darstellung,
- Figur 2: die Plakette aus Figur 1 ebenfalls in Draufsicht, nun bei Betrachtung durch eine Decodiereinrichtung, und
- Figur 3: die Plakette aus Figur 1 und 2 im Schnitt entlang der Linie III-III in Figur 2.

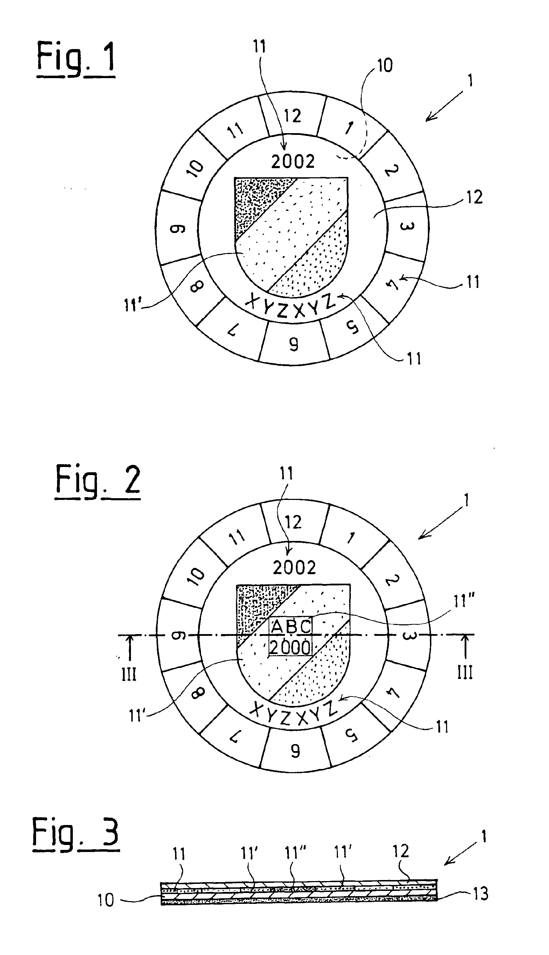

Figur 1 der Zeichnung zeigt als Ausführungsbeispiel eine Plakette 1 mit einem runden Umriß. Parallel zum äußeren Rand der Plakette 1 ist eine Bedruckung 11 in Form mehrerer Felder aufgebracht, die die Ziffern 1 bis 12, z.B. für die 12 Monate eines Jahres, tragen. Innerhalb dieses Ziffernringes ist oben als weitere Bedruckung 11 eine Ziffernfolge, z.B. eine Jahreszahl, aufgebracht. Im unteren Bereich befindet sich als weitere Bedruckung 11 eine Buchstabenfolge, z.B. zur Angabe einer Ausgabestelle der Plakette 1.

Im mittleren Bereich der Plakette 1 ist weiterhin ein Druckbild 11' aufgebracht, das hier die Form eines Wappens aufweist. Dieses Druckbild 11' ist ganz oder zumindest teilweise nach Maßgabe von digitalen Druckbilddaten erzeugt. In den digitalen Druckbilddaten ist ein durch digital erfolgte Datenveränderungen erzeugtes Latentbild als codierte Information enthalten, das bei Betrachtung der Plakette 1 mit bloßem Auge, wie in Figur 1 dargestellt, nicht erkennbar ist.

Den tragenden Teil der Plakette 1 bildet eine Trägerschicht 10, vorzugsweise aus einer Kunststofffolie, die die Bedruckung 11 sowie das Druckbild 11' trägt. Nach oben hin ist die Plakette 1 durch eine durchsichtige weitere Schicht 12, vorzugsweise eine transparente Kunststofffolie, abgedeckt. An der dem Betrachter abgewandten Rückseite befindet sich weiterhin eine Klebstoffschicht, die hier nicht sichtbar ist.

Figur 2 der Zeichnung zeigt die Plakette 1 aus Figur 1, nun aber bei Betrachtung durch eine Decodiereinrichtung, die z.B. eine spezielle optische Linse sein kann. Die Decodiereinrichtung macht das Latentbild 11'' innerhalb des Druckbildes 11' für den Betrachter sichtbar. Das Latentbild 11'' hat im vorliegenden Beispiel die Form von Buchstaben und Ziffern; selbstverständlich sind auch andere Zeichen möglich. Das Latentbild 11'' kann eine für alle Plaketten 1 identische Information oder auch eine für jede Plakette 1 individuelle Information oder eine Kombination daraus enthalten. Diese Information, die das Latentbild 11'' für den normalen Betrachter der Plakette 1 unsichtbar enthält, ist insbesondere zur Erzielung einer hohen Fälschungssicherheit sowie für Kontrollzwecke geeignet, um die Plakette 1 von nachgemachten Produkten unterscheiden zu können und um prüfen zu können, ob die vorgefundene Plakette 1 auch tatsächlich zu dem damit gekennzeichneten Objekt, z.B. ein Kraftfahrzeug, gehört.

Figur 3 der Zeichnung schließlich zeigt den Schichtenaufbau der Plakette 1 gemäß den Figuren 1 und 2 im Schnitt. Den tragenden Teil der Plakette 1 bildet die Trägerschicht 10, auf deren Oberseite die Bedruckung 11 sowie das Druckbild 11' mit dem darin enthaltenen Latentbild 11'' aufgebracht ist. Nach oben ist die Plakette 1 mit einer weiteren Schicht 12 abgedeckt, so daß die Bedruckung 11 und das Druckbild 11' mit dem Latentbild 11'' gegen äußere Einflüsse geschützt sind.

An der Unterseite der Trägerschicht 10 befindet sich eine Klebstoffschicht 13, die zur Anbringung der Plakette 1 an einer Anbringungsfläche, beispielsweise einem Kraftfahrzeugkennzeichen oder einer Kraftfahrzeugscheibe, dient. Bis zum Anbringen der Plakette 1 ist die Klebstoffschicht 13 zweckmäßig von einem Schutzpapier abgedeckt, das hier nicht dargestellt ist.

## Patentansprüche

1. Plakette (1), insbesondere Zulassungs-, Prüf-, Siegel- oder Mautplakette, vorzugsweise für Kraftfahrzeuge, mit einer Trägerschicht (10), einer darauf mindestens einseitig aufgebrachten ein- oder mehrfarbigen Bedruckung (11) und einer rück- oder vorderseitig angeordneten Klebstoffschicht (13), mittels der die Plakette (1) an einer Anbringungsfläche anklebbar ist,
**dadurch gekennzeichnet,**
**daß** die Bedruckung (11) zumindest teilweise aus einem Druckbild (11') besteht, das nach Maßgabe von digitalen Druckbilddaten erzeugt ist, und daß die Druckbilddaten digital gezielt so verändert sind,
**daß** sie mindestens ein mit bloßem Auge nicht erkennbares, im unmittelbar sichtbaren Druckbild (11') enthaltenes Latentbild (11'') bilden, das eine codierte Information enthält oder darstellt und das nur mit einer angepaßten optischen Decodiereinrichtung erkennbar ist.

2. Plakette nach Anspruch 1, **dadurch gekennzeichnet, daß** das Latentbild (11'') eine für eine Vielzahl von Plaketten (1) gleichbleibende feste Information enthält.

3. Plakette nach Anspruch 2, **dadurch gekennzeichnet, daß** das Latentbild (11'') eine Hersteller- oder Anwender- oder Ausgabestellen-Information enthält.

4. Plakette nach Anspruch 1, 2 oder 3, **dadurch gekennzeichnet, daß** das Latentbild (11'') eine für jede Plakette (1) individuelle Information enthält.

5. Plakette nach Anspruch 4, **dadurch gekennzeichnet, daß** das Latentbild (11'') eine fortlaufende Numerierung oder eine auf ein mit der Plakette (1) zu versehendes Objekt bezogene Information enthält.

6. Plakette nach einem der vorhergehenden Ansprüche, **dadurch gekennzeichnet, daß** bei Betrachtung des Druckbildes (11') durch die Decodiereinrichtung das Latentbild (11'') eine die codierte Information wiedergebende Folge von Ziffern und/oder Buchstaben und/ oder anderen Zeichen bildet.

7. Plakette nach einem der vorhergehenden Ansprüche, **dadurch gekennzeichnet, daß** als Decodiereinrichtung eine spezielle optische Linse einsetzbar ist.

8. Plakette nach einem der vorhergehenden Ansprüche,
**dadurch gekennzeichnet, daß** sie ein oder mehrere Latentbilder (11'') aus einer auf einem "endlosen" streifen- oder bahnförmigen Träger aufgedruckten vorproduzierten, Latentbilder enthaltenden Druckbild-Anordnung aufweist.

9. Plakette nach einem der vorhergehenden Ansprüche, **dadurch gekennzeichnet, daß** die Bedruckung (11) oder das Druckbild (11') in zwei oder mehr Teil-Druckbilder aufgeteilt ist, die getrennt voneinander auf die Plakette (1) aufgedruckt sind.

10. Plakette nach einem der vorhergehenden Ansprüche, **dadurch gekennzeichnet, daß** die Plakette (1) neben der Trägerschicht (10) und der Klebstoffschicht (13) wenigstens eine weitere Schicht (12) umfaßt und daß die Bedruckung (11) oder das Druckbild (11') zwischen wenigstens zwei Schichten (10, 12; 12, 13) der Plakette (1) eingeschlossen ist.

11. Plakette nach einem der vorhergehenden Ansprüche, **dadurch gekennzeichnet, daß** sie so ausgeführt ist, daß sie nach einem Ablösen von ihrer Anbringungsfläche unmittelbar erkennbar und unumkehrbar mechanisch und/oder optisch verändert ist.

12. Plakette nach einem der vorhergehenden Ansprüche, **dadurch gekennzeichnet, daß** diese mit einer zuzsätzlichen, unabhängig vom Latentbild (11'') ablesbaren Kennzeichnung, vorzugsweise in Form eines Barcodes, versehen ist.
